# EUROPÄISCHE PATENTSCHRIFT

(11) **EP 0 304 792 B1**
(45) Veröffentlichungstag und Bekanntmachung des Hinweises auf die Patenterteilung: **21.12.1994**
(21) Anmeldenummer: 88113387.0
(22) Anmeldetag: 18.08.1988
(51) Int. Cl.: C08G 75/02

(54) **Herstellung von Polyarylensulfiden hoher Reinheit**
Process for preparing polyarylensulfides of high purity
Procédé pour la préparation de polyarylène sulfides de haute pureté

(30) Priorität: 28.08.1987 DE 3728703
(43) Veröffentlichungstag der Anmeldung: 01.03.1989
(73) Patentinhaber: BAYER AG, 51368 Leverkusen (DE)
(72) Erfinder: Jakob, Wolfgang, D-4130 Moers (DE); Tresper, Erhard, Dr., D-4150 Krefeld 11 (DE); Alewelt, Wolfgang, Dr., D-4150 Krefeld (DE)

(56) Entgegenhaltungen:
- EP-A- 0 096 384
- EP-A- 0 144 987
- DE-A- 3 143 992
- US-A- 4 056 515

## Beschreibung

Die Erfindung betrifft ein Verfahren zur Herstellung von kristallinen Polyarylensulfiden. Dabei werden Polyarylensulfide von hoher Reinheit, geringem Elektrolytgehalt und geringer Uneinheitlichkeit erhalten. Die erhaltenen Polyarylensulfide haben verbesserte mechanische und elektrische Eigenschaften.

Die Herstellung von Polyarylensulfiden und ihre Isolierung sind bekannt (z.B. US-PS 2 513 188). Weiterhin ist bekannt, daß die Produktenreinheit wesentlich von der Aufarbeitung abhängt (z.B. JP-A 1536 84).

Nach der US-PS 4 056 515 können die bei der Herstellung der Polyarylensulfide verwendeten Losungsmittel auch abdestilliert und die Salze aus dem als Rückstand anfallenden Polymeren durch aufwendige Wasserwäschen entfernt werden. Bei den genannten Verfahren können jedoch bei der Produktisolierung Salze von der Polymermatrix eingeschlossen werden. Diese eingeschlossenen Salze werden bei den folgenden Reinigungsschritten nicht mehr herausgelost und verbleiben im Produkt. Dadurch verschlechtern sich die Eigenschaften der erhaltenen Polyarylsulfide, so daß eine Anwendung solcher Polymerer, z.B. im Elektronikbereich eingeschränkt ist.

Weiterhin ist bekannt, daß bei den bekannten Verfahren Polyarylensulfide erhalten werden, die einen nicht geringen Anteil an Oligomeren aufweisen, also von geringer Einheitlichkeit sind.

Aus der EP-A 96 384 ist bekannt, Polyarylensulfid aus der Reaktionslösung auszufällen, wobei vor dem Filtrationsschritt Wasser zugesetzt wird. Es kann weiterhin Natriumacetat zugegeben werden, um den Wasserdampfdruck zu verringern. Es gibt aber keinen Hinweis, daß der Zusatz dieses Salzes Einfluß auf die Reinheit oder Einheitlichkeit des Polyarylensulfids hat.

Gegenstand der Erfindung ist ein Verfahren zur Isolierung von Polyarylensulfid aus in bekannter Weise erhaltenen Reaktionslösungen bei dem man nach beendigter Polymerisation der Lösung Salze von Carbonsäuren, insbesondere von Aminocarbonsäuren, zusetzt, unter Rühren gegebenenfalls abkühlt und die so erhaltene Suspension bei Temperaturen von 100-220°C filtriert.

Aus der so erhaltenen Suspension kann durch herkömmliche Trennverfahren wie Filtrieren, Dekantieren und Zentrifugieren das Polymere isoliert werden.

Es werden hierbei Polyarylensulfide von geringem Elektrolytgehalt und hoher Einheitlichkeit (mit sehr geringem Anteil an Oligomeren) erhalten.

Die Reaktionslösungen können z.B. nach der US-PS 3 354 129, DE-OS 3 601 215 hergestellt werden. Erfindungsgemäß werden den Reaktionslösungen nach Beendigung der Polymerisation und vor der Isolierung des Polymeren die Carbonsäuresalze zugesetzt. Als Salze werden die Alkali- (Li, Na, K) oder Erdalkalisalze (Ca, Mg) organischer Säuren wie Benzoesäure, Phthalsäure, Toluolsulfonsäure und ihrer Homologen, aliphatischer Carbonsäuren und Aminosäuren, z.B. Propionsäure, Buttersäure, Adipinsäure, vorzugsweise der Aminocarbonsäuren, wie Glycin, Alanin, Phenylalanin, Aminobuttersäure, Aminocapronsäure usw. allein oder als Gemische verwendet.

Die Temperatur, bei der die Salze organischer Säuren zugegeben werden, liegt im allgemeinen bei der Reaktionstemperatur, gegebenenfalls bei 10-60°C unterhalb dieser Temperatur. Durch den erfindungsgemäßen Zusatz von Carbonsäuresalzen separiert sich eine Polymerphase, die dann unter Rühren zu kugelförmigen Aggregaten erstarrt. Die Bildung und Isolierung des Feststoffes kann durch weiteres Absenken der Temperatur auf 100 bis 220°C unterstützt werden. Die Zugabe der Carbonsäuresalze erfolgt im allgemeinen bei den Drücken, die sich durch die Temperaturvorgabe einstellen.

Die Menge der zugesetzten Carbonsäuresalze ist abhängig von dessen Molgewicht, von der Konzentration der Reaktionslösung, dem Molgewicht des gelösten Polyarylensulfides und der Temperatur der Reaktionslösung bei der Salzzugabe. Sie liegt bei 1 bis 50 Mol-%, bezogen auf das eingesetzte p-Dichlorbenzol, vorzugsweise 20 bis 40 Mol-%.

Die Salze können als solche fest oder flüssig oder als Lösung und/oder Suspension zugegeben werden. Es ist auch möglich, die korrespondierenden Säuren zuzugeben und die Salze in der Reaktionslösung zu erzeugen.

### Beispiele

### Vergleichsbeispiel 1:

Zu 2100 g N-Methylcaprolactam und 940,8 g p-Dichlorbenzol wurden
756,75 g Natriumsulfid-Hydrat (ca. 60%ig)
135 g 2,5%ige Natronlauge und
108 g Caprolactam
bei einer Temperatur von 220°C zudosiert.

Die Zudosierrate richtet sich nach dem Umsatz und wird so eingestellt, daß die Temperatur von 220°C bei gleichzeitiger zusätzlicher Beheizung des Reaktionsgefäßes eingehalten werden kann. Bei der Dosierung wird gleichzeitig das Wasser aus der Reaktion entfernt.

Nach beendeter Dosierung und 7 Stunden Nachreaktionszeit bei schachem Rückfluß wird das PPS in Wasser ausgefällt, elektrolytfrei gewaschen und mit einem organischen Lösungsmittel kurz extrahiert. Das getrocknete p-Polyphenylsulfid hat eine Schmelzviskosität von 45 Pas. (gemessen bei 10³Pa und 306°C), einen Gehalt an Natrium von 170 ppm und eine Uneinheitlichkeit von U = 3,71.

### Beispiel 1:

Es wurde analog Vergleichsbeispiel 1 gearbeitet, jedoch wurden dem Ansatz nach der Nachreaktion 294 g Natrium-N-Methylaminocapronat bei 230°C zugefügt. Danach wurde unter Rühren auf 170°C abgekühlt und bei dieser Temperatur filtriert. Der Filtrationsrückstand wurde dann mit 1000 g N-Methylcapropalactam und dann mit 6000 g Wasser gewaschen.

Nach Trocknung erhielt man ein p-Polyphenylensulfid mit einer Schmelzviskosität von ηm = 70 Pas. einem Natriumgehal von <5 ppm Na und einer Uneinheitlichkeit von U = 1.87.

### Beispiel 2:

Es wurde wie in Vergleichsbeispiel 1 gearbeitet. An die Nachreaktion anschließend wurden dem Ansatz jedoch 980 g 30%ige wäßrige Natrium-N-Methylaminocapronatlösung bei 230°C so zugegeben, daß das Wasser unmittelbar abdestillierte. Nach beendeter Zugabe wurde auf 160°C abgekühlt, filtriert und gewaschen wie in Beispiel 1 beschrieben und anschließend getrocknet.

Das erhaltene p-Polyphenylsulfid hatte eine Schmelzviskosität von ηm = 67 Pas., einen Natriumgehalt von <5 ppm Na und eine Uneinheitlichkeit von 1,98.

## Patentansprüche

1. Verfahren zur Isolierung von Polyarylensulfid aus in bekannter Weise erhaltenen Reaktionslösungen, bei dem man nach beendigter Polymerisation der Lösung Salze von Carbonsäuren zusetzt, unter Rühren gegebenenfalls abkühlt und die so erhaltene Suspension bei Temperaturen von 100 - 220° C filtriert.

2. Verfahren nach Anspruch 1, dadurch gekennzeichnet, daß man Aminocarbonsäuresalze zusetzt.

3. Verfahren nach Anspruch 1, dadurch gekennzeichnet, daß man vor der Zugabe der Salze die Temperatur der Reaktionslösung um 10-60°C absenkt.

## Claims

1. Process for the isolation of polyarylene sulphide from reaction solutions obtained in a known manner, in which process, on completion of polymerisation of the solution, carboxylic acid salts are added, the mixture optionally cooled while being stirred and the suspension thus obtained is filtered at temperatures of 100-220°C.

2. Process according to claim 1, characterised in that aminocarboxylic acid salts are added.

3. Process according to claim 1, characterised in that the temperature of the reaction solution is reduced by 10-60°C before addition of the salts.

## Revendications

1. Procédé pour isoler le sulfure de polyarylène solutions de réaction obtenues de manière connue dans lequel, après la polymérisation, on ajoute des sels d'acides carboxyliques à la solution, on refroidit le cas échéant sous agitation et on filtre la suspension obtenue à des température de 100 à 220°C.

2. Procédé selon revendication 1, caractériseé en ce que l'on ajoute des sels d'acides aminocarboxyliques.

3. Procédé selon revendication 1, caractérisé en ce que, avant d'ajouter les sels, on abaisse la température de la solution de réaction de 10 à 60°C.
